# EUROPEAN PATENT APPLICATION

(11) **EP 2 640 150 A2**
(43) Date of publication of application: **18.09.2013**
(21) Application number: 12195496.0
(22) Date of filing: 04.12.2012
(51) Int. Cl.: H04W 74/00

(54) **Apparatuses and methods for handling random access procedures**

(30) Priority: 16.03.2012 US 201261611758 P; 27.11.2012 US 201213686261
(71) Applicant: Acer Incorporated, Taipei Hsien 221 (TW)
(72) Inventor: Ye, Shiang-Rung, 221 Hsichih, Taipei Hsien (TW)
(74) Representative: 2K Patentanwälte Blasberg Kewitz & Reichel

(57) **Abstract**

A mobile communication device with a wireless module and a controller module is provided for handling random access procedures in a multi-carrier system. The wireless module performs wireless transceiving to and from a cellular access network comprising a first SCell and a second SCell. The controller module performs operations of a Media Access Control (MAC) layer. The operations include receiving, during an ongoing random access procedure on the first SCell, a PDCCH order for initiating another random access procedure on the second SCell from the cellular access network via the wireless module, and not processing the PDCCH order.

## Description

### Cross reference to related AppLIcations

This Application claims priority of U.S. Provisional Application No. 61/611,758, filed on March 16, 2012, the entirety of which is incorporated by reference herein.

### BACKGROUND of the invention

### Field of the Invention

The invention generally relates to the techniques for handling random access procedures, and more particularly, to apparatuses, systems, and methods for handling random access procedures in a multi-carrier system.

### Description of the Related Art

In order to meet user demands for higher data rates in wireless communications, support for wider transmission bandwidths is required. A so-called Carrier Aggregation (CA) technique has been proposed to allow for the expansion of effective bandwidth delivered to a user terminal through concurrent utilization of radio resources across multiple carriers. The CA technique is most useful when it is difficult to derive a contiguous and extra wide bandwidth. With the CA technique, 2 or more frequency bands may be aggregated to form a larger transmission/receive bandwidth. Each of the aggregated frequency bands is generally referred to as a carrier frequency.

Specifically, each carrier frequency needs to be configured and activated before it may be used for data transmission or reception. The network side may first transmit a Radio Resource Control (RRC) message to configure the carrier frequencies for a User Equipment (UE) (or may be referred to as a Mobile Station (MS)), and then transmit a Medium Access Control (MAC) activation command to the UE to activate one of the carrier frequencies. After that, the UE may initiate a random access procedure on the activated carrier frequency for uplink timing alignment, requesting radio resources, or other purposes. However, if a UE is configured with more than one carrier frequency, there may be a situation where multiple random access procedures are requested to be performed on different carrier frequencies at the same time for the UE. However, in some radio access technologies, such as the Long Term Evolution (LTE) technology, only one random access procedure is allowed to be performed at a given time for a UE. As a result, confusion regarding which one of the random access procedures should be performed first may occur, which causes indeterminate behavior or even malfunction of the UE.

### Brief Summary of the Invention

The invention proposes solutions for the UE (referred to herein as mobile communication device) to solve the confusion regarding which random access procedure should be performed first among a plurality of requested random access procedures.

In one aspect of the invention, a mobile communication device comprising a wireless module and a controller module is provided for handling random access procedures in a multi-carrier system. The wireless module performs wireless transceiving to and from a cellular access network comprising a first SCell and a second SCell. The controller module performs operations of a Media Access Control (MAC) layer, wherein the operations comprises: receiving, during an ongoing random access procedure on the first SCell, a PDCCH order for initiating another random access procedure on the second SCell from the cellular access network via the wireless module, and not processing the PDCCH order.

In another aspect of the invention, a method for a mobile communication device to handle random access procedures in a MAC layer with a cellular access network comprising a first SCell and a second SCell is provided. The method comprises the steps of receiving, during an ongoing random access procedure on the first SCell, a PDCCH order for initiating another random access procedure on the second SCell from the cellular access network, and not processing the PDCCH order.

Other aspects and features of the invention will become apparent to those with ordinary skill in the art upon review of the following descriptions of specific embodiments of the mobile communication devices and methods for handling random access procedures.

### BRIEF DESCRIPTION OF DRAWINGS

The invention can be more fully understood by reading the subsequent detailed description and examples with references made to the accompanying drawings, wherein:

Fig. 1 is a block diagram illustrating a multi-carrier system according to an embodiment of the invention;

Fig. 2 is a message sequence chart illustrating the handling of random access procedures according to an embodiment of the invention;

Fig. 3 is a message sequence chart illustrating the handling of random access procedures according to another embodiment of the invention; and

Fig. 4 is a flow chart illustrating a method for handling random access procedures in the MAC layer according to an embodiment of the invention.

### Detailed Description of the Invention

The following description is of the best-contemplated mode of carrying out the invention. This description is made for the purpose of illustrating the general principles of the invention and should not be taken in a limiting sense. The scope of the invention is best determined by reference to the appended claims.

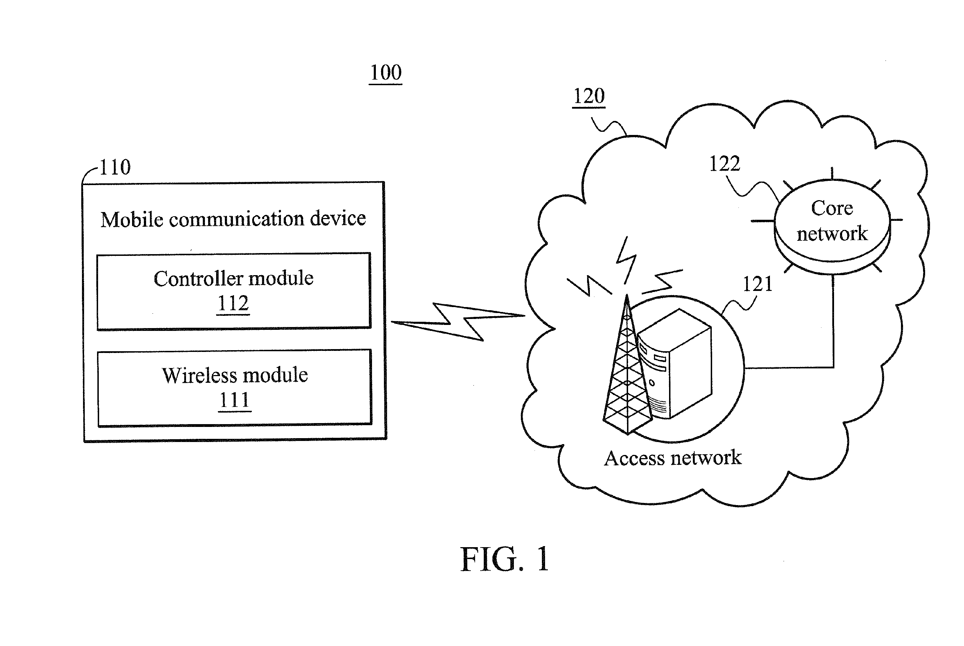

Fig. 1 is a block diagram illustrating a multi-carrier system according to an embodiment of the invention. In the multi-carrier system 100, the mobile communication device 110 is wirelessly connected to the service network 120 via the air interface for obtaining wireless services, wherein both of the mobile communication device 110 and the service network 120 support CA technique and multiple carrier frequencies. The service network 120 comprises at least one cellular access network 121 and the core network 122. In general, the cellular access network 121 is controlled by the core network 122 to provide the functionality of wireless transceiving, and the cellular access network 121 may comprise one or more cellular stations, such as base stations, Node-Bs, or evolved Node-B (eNB), depending on the radio access technology in use. Although not shown, the core network 122 may further enable interfacing with external networks, such as the Public Switched Telephone Network (PSTN), which is called the Circuit Switched (CS) domain functionality, or interfacing with the Internet Protocol (IP) based Network, such as the Internet, which is called the Packet Switched (PS) domain functionality.

The mobile communication device 110 comprises a wireless module 111 and a controller module 112, wherein the wireless module 111 is configured to perform the functionality of wireless transceiving and the controller module 112 is configured to control the operation of the wireless module 111. To further clarify, the wireless module 111 may be a Radio Frequency (RF) unit (not shown), and the controller module 112 may be a general-purpose processor or Micro-Control Unit (MCU) of a baseband unit (not shown). The baseband unit may contain multiple hardware devices to perform baseband signal processing, including analog to digital conversion (ADC)/digital to analog conversion (DAC), gain adjusting, modulation/demodulation, encoding/decoding, and so on. The RF unit may receive RF wireless signals, convert the received RF wireless signals to baseband signals, which are processed by the baseband unit, or receive baseband signals from the baseband unit and convert the received baseband signals to RF wireless signals, which are later transmitted. The RF unit may also contain multiple hardware devices to perform radio frequency conversion. For example, the RF unit may comprise a mixer to multiply the baseband signals with a carrier oscillated in the radio frequency of the wireless communications system, wherein the radio frequency may be 900MHz, 2100MHz, or 2.6GHz utilized in LTE/LTE-Advanced technology, or others depending on the radio access technology in use. Although not shown, the mobile communication device 110 may further comprise other functional components, such as a display unit and/or keypad serving as the Man-Machine Interface (MMI), a storage unit storing the program codes of applications, or others. Similarly, the cellular stations of the cellular access network 121 may each comprise a wireless module and a controller module, wherein the wireless module is controlled by the controller module to perform the functionality of wireless transceiving.

Since each carrier frequency supported by the cellular access network 121 (i.e., the cellular station of the cellular access network 121) forms a separate cell with its own cell ID, the mobile communication device 110 may connect to one Primary Serving Cell (referred to herein as PCell) and up to 4 or more Secondary Serving Cells (referred to herein as SCells) depending on the radio access technology in use. The PCell is defined as the cell which is initially configured during connection establishment, while the SCells are cells which may be configured after connection establishment for providing additional radio resources. Note that, the random access procedures in the invention are performed on the SCells.

In one embodiment, the service network 120 may be an LTE network, the cellular access network 121 may be an Evolved Universal Terrestrial Radio Access Network (E-UTRAN) which comprises at least one eNB, and the core network 122 may be an Evolved Packet Core (EPC), while the mobile communication device 110 may be a UE or MS which utilizes the LTE technology. Please note that, in other embodiments, instead of the LTE technology, other radio access technologies which support the CA technique and multiple carrier frequencies, such as the LTE-Advanced technology, the Worldwide Interoperability for Microwave Access (WiMAX) technology, and others, may be utilized by the service network 120 and the mobile communication device 110, and the invention is not limited thereto.

To further clarify, in the mobile communication device 110, the controller module 112 controls the wireless module 111 to perform the random access procedures with the cellular station of the cellular access network 121. Specifically, the controller module 112 is configured to perform the operations of the Media Access Control (MAC) layer for handling random access procedures. In other words, the methods for handling random access procedures proposed in the invention are applied in the MAC layer. Note that, the controller module 112 is not limited just to perform operations of the MAC layer, it may also be configured to perform operations of other layers of the used communication protocol, including the Non-Access Stratum (NAS), Radio Resource Control (RRC) layer, the Radio Link Control (RLC) layer, and Physical (PHY) layer, etc., for performing procedures other than the random access procedure. Detailed description of the procedures other than the random access procedure is omitted herein, since they are beyond the scope of the invention.

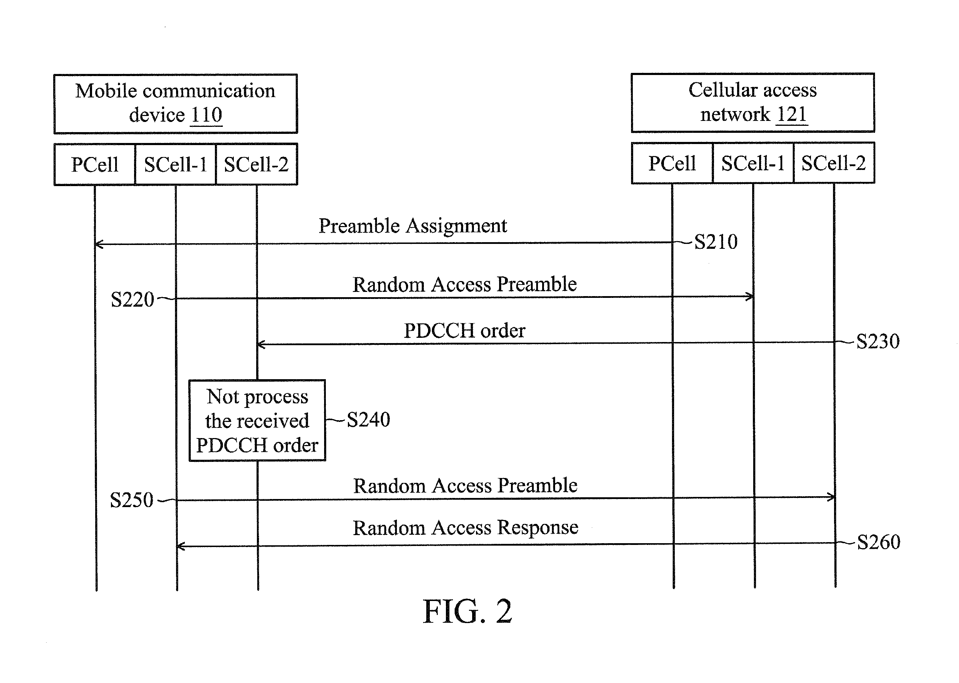

Fig. 2 is a message sequence chart illustrating the handling of random access procedures according to an embodiment of the invention. In this embodiment, the cellular access network 121 is an E-UTRAN supporting three or more carrier frequencies which form one PCell and two SCells of the same secondary Timing Advance Group (sTAG), and the mobile communication device 110 is a UE utilizing the LTE technology or LTE-Advanced technology. Particularly, the mobile communication device 110 is initially connected to the PCell and SCells of the cellular access network 121, and receives a Preamble Assignment message from the cellular access network 121 on the PCell (step S210). In this embodiment, the random access procedure on the SCell-1 is a non-contention based random access procedure. Specifically, the cellular access network 121 may transmit an RRC message, such as an RRC Connection Reconfiguration message, to the mobile communications device 110 to configure the connection to the PCell and Scells, and the Preamble Assignment message is transmitted via the DL-SCH, which contains an assigned preamble for the mobile communication device 110. Next, the mobile communication device 110 initiates a random access procedure on one SCell (denoted as SCell-1) by transmitting a Random Access Preamble message via the P-RACH using the assigned preamble (step S220). In one embodiment, the step S220 may be performed in response to receiving a PDCCH order (not shown) which indicates that the mobile communication device 110 is to initiate the random access procedure on the SCell-1, or the step S220 may be performed by the mobile communication device 110 spontaneously.

Before receiving a Random Access Response message on the SCell-1, the mobile communication device 110 receives a PDCCH order on the SCell-2 from the cellular access network 121, which indicates an initiation of another random access procedure on another SCell (denoted as SCell-2) (step S230). That is, the PDCCH order is received during the ongoing random access procedure on the SCell-1. The mobile communication device 110 does not process the received PDCCH order (step S240), due to the ongoing random access procedure on the SCell-1. That is, the random access procedure on the SCell-2 is not initiated in response to not processing the received PDCCH order, and the ongoing random access procedure on the SCell-1 is not interrupted by the PDCCH order. In one embodiment, the mobile communication device 110 may discard the PDCCH order, so that the PDCCH order is not processed.

Thus, the ongoing random access procedure on the SCell-1 continues. Subsequently, the mobile communication device 110 retransmits the Random Access Preamble message on the SCell-1 when a guard timer for the random access procedure expires and no Random Access Response message is received from the cellular access network 121 (step S250). In reply, the cellular access network 121 transmits a Random Access Response message on the SCell-1 to the mobile communication device 110 (step S260), and the procedure ends. Specifically, the Random Access Response message is transmitted via the DL-SCH, which contains timing advance information for uplink timing alignment of the mobile communication device 110.

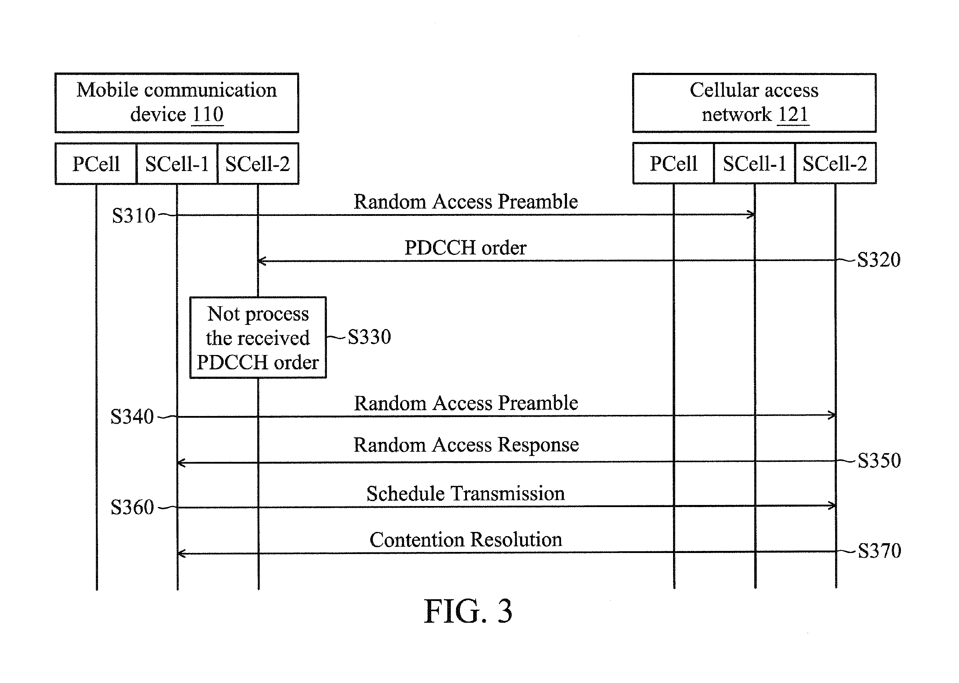

Fig. 3 is a message sequence chart illustrating the handling of random access procedures according to another embodiment of the invention. Similar to Fig. 2, the cellular access network 121 is an E-UTRAN supporting three or more carrier frequencies which form one PCell and two SCells of the same sTAG, and the mobile communication device 110 is a UE utilizing the LTE technology or LTE-Advanced technology. Particularly, the mobile communication device 110 is initially connected to the PCell and SCells of the cellular access network 121. In one embodiment, the cellular access network 121 may transmit an RRC message, such as an RRC Connection Reconfiguration message, to the mobile communications device 110 to configure the connection to the PCell and Scells. To begin, the mobile communication device 110 initiates a random access procedure on one SCell (denoted as SCell-1) by transmitting a Random Access Preamble message via the P-RACH (step S310). In this embodiment, the random access procedure on the SCell-1 is a contention based random access procedure, and the mobile communication device 110 selects one of a plurality of P-RACH configurations for the transmission of the Random Access Preamble message, which may be provided to the mobile communication device 110 prior to the initiation of the random access procedure.

Before receiving any response from the cellular access network 121 on the SCell-1, the mobile communication device 110 receives a PDCCH order on the SCell-2 from the cellular access network 121, which indicates an initiation of another random access procedure on another SCell (denoted as SCell-2) (step S320). That is, the PDCCH order is received during the ongoing random access procedure on the SCell-1. The mobile communication device 110 does not process the received PDCCH order (step S330), due to the ongoing random access procedure on the SCell-1. That is, the random access procedure on the SCell-2 is not initiated in response to not processing the received PDCCH order, and the ongoing random access procedure on the SCell-1 is not interrupted by the PDCCH order. In one embodiment, the mobile communication device 110 may discard the PDCCH order, so that the PDCCH order is not processed.

Thus, the ongoing random access procedure on the SCell-1 continues. Next, the mobile communication device 110 retransmits the Random Access Preamble message on the SCell-1 when a guard timer for the random access procedure expires and no Random Access Response message is received from the cellular access network 121 (step S340). In reply, the cellular access network 121 transmits a Random Access Response message on the SCell-1 to the mobile communication device 110 (step S350). Specifically, the Random Access Response message is transmitted via the DL-SCH, which contains timing advance information for uplink timing alignment, an uplink grant, and a temporary C-RNTI for the mobile communication device 110. Subsequently, the mobile communication device 110 uses the uplink grant for schedule transmission to the cellular access network 121 along with the temporary C-RNTI (step S360). In response to receiving the schedule transmission, the cellular access network 121 replies to the mobile communication device 110 with a Contention Resolution message via the DL-SCH using the temporary C-RNTI (step S370), and the procedure ends.

Alternatively, for the step S320, the PDCCH order may be received before receiving a Contention Resolution message from the cellular access network 121. In other words, the PDCCH order may be received after the reception of a Random Access Response message or after the schedule transmission, as long as a Contention Resolution message is not received yet.

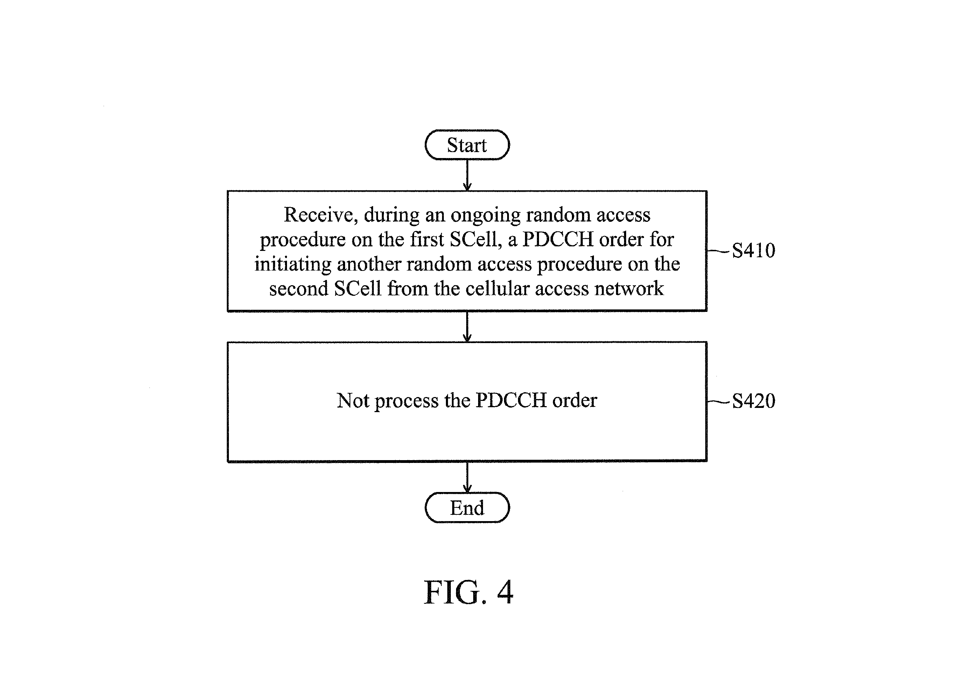

Fig. 4 is a flow chart illustrating a method for handling random access procedures in the MAC layer according to an embodiment of the invention. The method may be applied to any mobile communication device supporting the CA technique and multiple carrier frequencies, such as a UE or MS utilizing the LTE/LTE-Advanced technology. Initially, the mobile communications device is wirelessly connected to a cellular access network comprising a first SCell and a second SCell of the same sTAG. To begin, the mobile communications device receives, during an ongoing random access procedure on the first SCell, a PDCCH order for initiating another random access procedure on the second SCell from the cellular access network (step S410). In one embodiment, the PDCCH order is transmitted on the second SCell.

Subsequently, the mobile communications device does not process the PDCCH order (step S420). In other words, the mobile communication device ignores or discards the received PDCCH order, so that the random access procedure on the second SCell is not initiated and the random access procedure on the first SCell is not interrupted by the received PDCCH order. Thus, the mobile communication device may unambiguously determine which random access procedure is to be performed when multiple random access procedures on different SCells are requested.

While the invention has been described by way of example and in terms of preferred embodiment, it is to be understood that the invention is not limited thereto. Those who are skilled in this technology can still make various alterations and modifications without departing from the scope and spirit of this invention. For example, the methods for handling random access procedures may also be applied for any evolutionary technology of the LTE/LTE-Advanced technology family or other radio access technologies which support CA technique and multiple carrier frequencies. Therefore, the scope of the invention shall be defined and protected by the following claims and their equivalents.

## Claims

1. A mobile communication device for handling random access procedures in a multi-carrier system, comprising:
a wireless module, performing wireless transceiving to and from a cellular access network comprising a first SCell and a second SCell of a timing advance group; and
a controller module, performing operations of a Media Access Control (MAC) layer, wherein the operations comprises: receiving, during an ongoing random access procedure on the first SCell, a PDCCH order for initiating another random access procedure on the second SCell from the cellular access network via the wireless module, and not processing the PDCCH order.

2. The mobile communication device of claim 1, wherein another random access procedure on the second SCell is not initiated in response to the PDCCH order not being processed.

3. The mobile communication device of claim 1 or 2, wherein the operation of not processing the PDCCH order further comprises discarding the PDCCH order.

4. The mobile communication device of any of the claims 1 to 3, wherein the MAC layer belongs to a communication protocol of the Long Term Evolution (LTE) technology or LTE-Advanced technology.

5. A method for a mobile communication device to handle random access procedures in a Media Access Control (MAC) layer with a cellular access network comprising a first SCell and a second SCell of a timing advance group, the method comprising:
receiving, during an ongoing random access procedure on the first SCell, a PDCCH order for initiating another random access procedure on the second SCell from the cellular access network; and
not processing the PDCCH order.

6. The method of claim 5, wherein another random access procedure on the second SCell is not initiated in response to the PDCCH order not being processed.

7. The method of claim 5 or 6, wherein the step of not processing the PDCCH order further comprises discarding the PDCCH order.

8. The method of any of the claims 5 to 7, wherein the MAC layer belongs to a communication protocol of the Long Term Evolution (LTE) technology or LTE-Advanced technology.
